# EUROPEAN PATENT SPECIFICATION

(11) **EP 3 431 321 B1**
(45) Date of publication and mention of the grant of the patent: **28.10.2020**
(21) Application number: 16894588.9
(22) Date of filing: 14.12.2016
(51) Int. Cl.: B60L 7/28, B61H 7/00, B61H 7/12, F16D 63/00, F16D 65/16, F16D 65/44, F16D 66/00, F16D 121/20

(54) **BRAKING DEVICE FOR RAILWAY VEHICLE**
BREMSVORRICHTUNG FÜR SCHIENENFAHRZEUG
DISPOSITIF DE FREINAGE POUR VÉHICULE FERROVIAIRE

(30) Priority: 17.03.2016 JP 2016053369
(43) Date of publication of application: 23.01.2019
(73) Proprietor: Mitsubishi Electric Corporation, Chiyoda-ku Tokyo 100-8310 (JP)
(72) Inventor: SHIMOHATA Kenji, Tokyo 100-8310 (JP); SHIRATSUCHI Koji, Tokyo 100-8310 (JP); ISHITOBI Chikato, Tokyo 100-8310 (JP); KADOI Shinsuke, Tokyo 100-8310 (JP); NAKAYAMA Tomoyuki, Tokyo 100-8310 (JP)
(74) Representative: Sajda, Wolf E.
(86) International application number: PCT/JP2016/087140
(87) International publication number: WO 2017/158971

(56) References cited:
- WO-A2-2015/043971
- DE-C1- 4 438 609
- JP-A- S 473 353
- JP-A- H08 237 808
- JP-A- 2000 203 426
- JP-A- 2000 203 426
- JP-A- 2008 220 118
- JP-A- 2008 220 118
- JP-B1- S 482 295
- US-A- 3 768 607

## Description

### TECHNICAL FIELD

The present invention relates to a braking device for a moving body, such as a railroad vehicle or the like, which performs braking by using an eddy- current force between an electromagnet placed on the movable object and a rail.

### BACKGROUND ART

In Patent Document 1, as a conventional braking device for a moving body, such a device is disclosed in which multiple electromagnets are provided that are fixed to an underpart of a vehicle so as to be arranged, above the rail head, oppositely in the width direction of the rail and serially along the longitudinal direction of the rail, wherein, by switching the polarities of the DC currents flowing in the coils, a derailment prevention mode in which an attraction force is generated between the rail and the electromagnets and a mode in which an eddy current is caused to flow in the rail to thereby get a braking force, are switched to each other.

Further, in Patent Document 2, such a rail brake is disclosed that causes its electromagnet, at the time of emergency brake operation, to move toward and make contact with the rail, to thereby increase the braking force by using together a friction force and an eddy-current braking force, to achieve power saving.

Further, in Patent Document 3, such a control device is disclosed that detects a speed of a train, to thereby control braking thereof by applying a magnetic field to a member for movement, such as a disc, a rail or the like, in response to a change in the speed.

Further, in Patent Document 4, such a device is disclosed that is provided with a mechanism for changing the interval between its electromagnet and the rail, and that prevents train rollover using an attraction force between the electromagnet and the rail.

### LIST OF CITATIONS

### PATENT DOCUMENT

Patent Document 1 Japanese Patent Application Laid-Open JP 2006-199170 A (Paragraph 0022; FIG. 4)
Patent Document 2 Japanese Patent Application Laid-Open JP H04-207914 A (Page 3, Upper-right Column, Lines 3 to 18; FIG. 2)
Patent Document 3 Japanese Patent Application Laid-Open JP S60-167602 A (Page 4, Upper-left Column, Lines 5 to 11; FIG. 2)
Patent Document 4 Japanese Patent Application Laid-Open JP 2012-201179 A (Paragraph 0045; FIG. 6)

Patent document WO 2015/043971 A2 discloses an electromagnetic brake for moving body according to the state of the art.

### SUMMARY OF THE INVENTION

### PROBLEMS TO BE SOLVED BY THE INVENTION

In such devices for braking a movable object, the distance between the oppositely placed SN-poles is small and is unchanged even at the time of switching the coil polarity. Thus, there is a problem that a magnetic flux leaks toward an interval between the S-pole and the N-pole, so that no strong magnetic force is provided between the rail and the electromagnet. Further, there is a problem that a shock to the passengers is large at the operation of the device for braking.

This invention has been made to solve the problems as described above, and an object thereof is to provide a braking device for a moving body by which the time from issue of the operation command for the braking device to generation of the braking force is shortened, a strong magnetic force without magnetic-flux leakage is achieved, and braking is accomplished with a small shock to the passengers.

### MEANS FOR SOLVING THE PROBLEMS

A braking device for a moving body according to the invention is a braking device for a moving body characterized by comprising a braking unit in which multiple magnetic poles each wound with a coil are arranged side by side in a moving direction of a movable object that is movable along a rail, and which is placed so that an interval is provided between the magnetic poles and the rail during traveling of the movable object, wherein, at the time of starting braking, the braking unit is configured with plural magnetic-pole sets which are each a set of adjacent magnetic poles in the multiple magnetic poles, and in which polarities of the adjacent magnetic poles are set to the same polarity but adjacent magnetic-pole sets in the plural magnetic-pole sets are set to have mutually different polarities; and thereafter, the polarities of the adjacent magnetic poles are set to mutually different polarities.

In another aspect, it is a braking device for a moving body characterized by comprising a braking unit in which multiple magnetic poles each wound with a coil are arranged side by side in a moving direction of a movable object that is movable along a rail, and which is placed so that an interval is provided between the magnetic poles and the rail during traveling of the movable object, wherein the braking unit energizes half of the coils wound around each set of adjacent magnetic poles in the multiple magnetic poles, and thereafter, energizes all sets of adjacent magnetic poles to thereby change each set of adjacent magnetic poles to have mutually different polarities.

### EFFECT OF THE INVENTION

According to the invention, the generation of the eddy current is controlled, so that it is possible to accomplish braking with a short time from issue of the operation command for the braking device to generation of the braking force and with a small shock to the passengers.

### BRIEF DESCRIPTION OF THE DRAWINGS

- FIG. 1: is a diagram for explaining a braking operation of a railroad vehicle in which an electromagnetic brake device according to the invention is installed.
- FIG. 2: is a cross-sectional view showing a configuration of an electromagnetic brake device according to Embodiment 1 of the invention.
- FIG. 3: is a perspective view of a brake electromagnet of the electromagnetic brake device according to Embodiment 1 of the invention.
- FIG. 4A, FIG. 4B and FIG. 4C: are cross-sectional views for explaining an operation of the electromagnetic brake device according to Embodiment 1 of the invention.
- FIG. 5: is a cross-sectional view for explaining an operation of the electromagnetic brake device according to Embodiment 1 of the invention.
- FIG. 6: is a graph showing a temporal variation in braking force of the electromagnetic brake device according to Embodiment 1 of the invention.
- FIG. 7: is a cross-sectional view showing a configuration of an electromagnetic brake device according to Embodiment 2 of the invention.
- FIG. 8A and FIG. 8B: are cross-sectional views showing a configuration of an electromagnetic brake device according to Embodiment 3 of the invention.
- FIG. 9: is a cross-sectional view showing a configuration of an electromagnetic brake device according to Embodiment 4 of the invention.
- FIG. 10: is a cross-sectional view showing a configuration of an electromagnetic brake device according to Embodiment 5 of the invention.
- FIG. 11: is a cross-sectional view showing a configuration of an electromagnetic brake device according to Embodiment 6 of the invention.
- FIG. 12A and FIG. 12B: are cross-sectional views showing a configuration of an electromagnetic brake device according to Embodiment 7 of the invention.
- FIG. 13: is a schematic diagram of a circuit for energizing an electromagnetic brake device, according to Embodiment 8 of the invention.
- FIG. 14: is a schematic diagram of a circuit for energizing an electromagnetic brake device, according to Embodiment 9 of the invention.
- FIG. 15: is a schematic diagram of a circuit for energizing an electromagnetic brake device, according to Embodiment 10 of the invention.
- FIG. 16: is a schematic diagram of a circuit for energizing an electromagnetic brake device, according to Embodiment 11 of the invention.
- FIG. 17: is a schematic diagram of a circuit for energizing an electromagnetic brake device, according to Embodiment 12 of the invention.

### MODES FOR CARRYING OUT THE INVENTION

### Embodiment 1

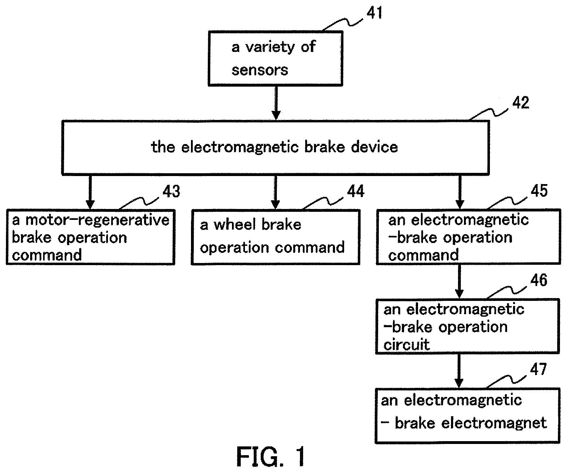

FIG. 1 is a diagram for explaining a braking operation of a railroad vehicle in which an electromagnetic brake device according to the invention is installed. There may be cases where the train operator executes an operation for braking, or a brake operation is automatically caused by an electromagnetic brake device 42 at its own judgement, on the basis of position, speed or like information from a variety of sensors 41 about a movable object such as a railroad vehicle.

In normal times such as when the vehicle is going to stop at a station, the electromagnetic brake device 42 activates a motor-regenerative brake function according to a motor-regenerative brake operation command 43, or applies a wheel friction brake and the like, namely, uses a frictional force between the rail and the wheel, according to a wheel brake operation command 44, to thereby achieve intended reduction in speed, so that the vehicle is caused to stop.

When an earthquake occurs or an obstacle exists in front of the vehicle, the electromagnetic brake device 42 is going to cause the vehicle to stop in a time as short as possible. However, the frictional force between the rail and the wheel has been known to decrease when water, oil or the like adheres between the rail and the wheel, and thus has an upper limit.

Applying a braking force beyond the frictional force causes slippage between the rail and the wheel. In such an occasion, when an electromagnetic brake without relying on a frictional force between the rail and the wheel is also activated at the same time, it is possible to shorten the time before stoppage. Note that the electromagnetic brake may be used not only in an emergency. Thus, it may also be used as a normal brake, and this makes it possible to achieve downsizing of a frictional brake for the wheel, or something like that.

The operation of the electromagnetic brake is based on an electromagnetic-brake operation command 45 from the electromagnetic brake device 42 and, upon receiving the electromagnetic-brake operation command 45, an electromagnetic-brake operation circuit 46 operates, so that a current flows in the coil of an electromagnetic- brake electromagnet 47, causing an operation as the electromagnetic brake.

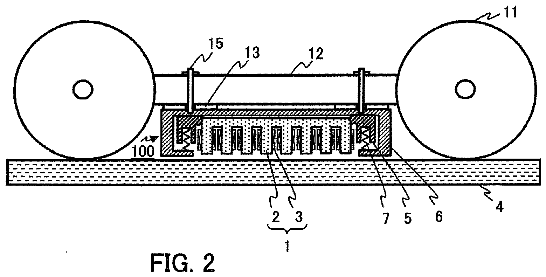

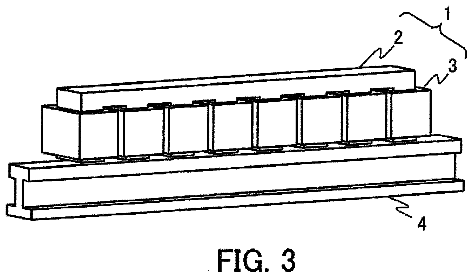

FIG. 2 is a cross-sectional view showing a configuration of an electromagnetic brake device 100 according to Embodiment 1 of the invention, and FIG. 3 is a perspective view showing a state of a braking electromagnet 1 in the electromagnetic brake device 100 and a rail 4. For usual railway trains or electric railcars, unlike monorails with a rail in single row, there are provided rails in two rows in the traveling direction; however, in the figures, only one-side portion thereof is illustrated. Note that respective configuration elements are right-left symmetric with respect to the traveling direction, so that numerals are put only for the elements on one side.

As shown in FIG. 2, the electromagnetic brake device 100 which is a braking device for a moving body, includes: a brake electromagnet 1 comprised of magnetic poles 2 and coils 3; jigs 5; an outer frame 6; and springs 7. As shown in FIG. 3, the magnetic poles 2 and the coils 3 in the brake electromagnet 1 as a braking unit are arranged in single row along the longitudinal direction of the rail 4.

The magnetic poles 2 project like a comb from a straight member. In Embodiment 1, such a case is shown where the numbers of the magnetic poles 2 and the coils 3 are each eight; however, the number may of course be other than eight. With respect to the comb-like magnetic poles 2, its material just has to be a magnetic material, and it may be formed by being cut out from a block of iron or magnetic stainless steel, or not by being cut out therefrom but by combining a horizontal straight member with eight vertical straight members.

Further, when it is formed by stacking thin sheets such as silicon steel sheets, plated steel sheets or the like, there is a merit that the time response with which a magnetic field is induced is made faster. Note that, in Embodiment 1, the width of the magnetic pole is set to about 20 mm to 50 mm, and the thickness of an upper portion in the brake electromagnet and across the electromagnetic poles is comparable to the thickness of each magnetic pole, and is set to about 20 mm to 50 mm.

In the electromagnetic brake device 100, the outer frame 6 is fixed by screws 15 through a spacer 13 to a bogie frame 12 connected between the shafts of two wheels 11 put on the rail 4. The distance between the electromagnetic brake device 100 and the rail 4 can be adjusted in such a manner that the thickness of the spacer 13 between the bogie frame 12 and the outer frame 6 is changed to thereby shift the heightwise position of the outer frame 6.

The outer frame 6 of the electromagnetic brake device 100 is formed into a C-shape, and in the outer frame 6, the comb-like brake electromagnet 1 comprised of the magnetic poles 2 and the coils 3 whose numbers are each eight, is placed. The jigs 5 are fixed to the both ends of the brake electromagnet 1, and gaps are created between the jigs 5 and the outer frame 6, so that the jigs 5 and the brake electromagnet 1 are movable vertically upward and downward in the outer frame 6.

In the jigs 5, the springs 7 are inserted, and the springs 7 impel the jigs 5 and the brake electromagnet 1 vertically upward from the outer frame 6. The force of the springs 7 is set larger than the gravitational force by the brake electromagnet 1 and the jigs 5 to be applied toward the rail. Instead of the springs 7, their positions may be locked using a small electromagnet for locking, an air pressure, an oil pressure or the like.

Further, in order to cut a magnetic path established from the end of the pole 2 through the under side and lateral side of the outer frame 6 to an upper magnetic pole, it is desired that the jigs 5 be formed of a non-magnetic material such as a stainless steel or the like, or be partly comprised of a non-magnetic material.

Further, in Embodiment 1, the upper side of the brake electromagnet 1 is set lower than the upper side of the jigs 5 to thereby mitigate the effects of a magnetic path returning to the magnetic pole of the brake electromagnet 1 through the upper side of the outer frame 6.

In the case where no coil in the brake electromagnet 1 is energized in normal times, the brake electromagnet 1 is locked in an upper position inside the outer frame 6 by the force of the springs 7, with an interval held between the brake electromagnet 1 and the rail 4. The interval in this case is set to about 5 mm to 20 mm, in consideration of: an event that a stone or like foreign substance is intruded on the rail 4; a step difference at the joint in the rail; and the like.

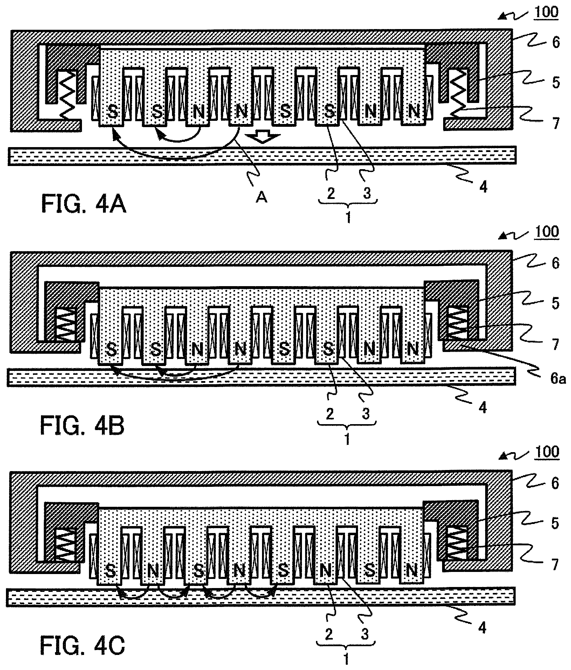

Next, the operation of the electromagnetic brake device 100 according to Embodiment 1 of the invention will be described using figures. FIG. 4A, FIG. 4B and FIG. 4C are cross-sectional views showing the operation of the electromagnetic brake device 100 according to Embodiment 1 of the invention.

In FIG. 4A, FIG. 4B and FIG. 4C, a state of the electromagnetic brake device 100 and the rail 4 is shown in an enlarged manner, and the direction of a magnetic flux emerging from the pole is indicated by an arrow.

In an emergency, the electromagnetic brake device 100 is caused to operate as an emergency brake, and therefore, first of all, in a state in normal times as shown in FIG. 4A where the brake electromagnet 1 is placed at the upper position inside the outer frame 6 due to the force of the springs 7, the coils 3 are energized in the directions so that the polarities of the magnetic poles 2 in the brake electromagnet 1 are provided as "SSNNSSNN" from the observer's left in the figure, so that the magnetic flux-A flowing toward the rail 4 is enhanced and thus the electromagnetic force (attraction force) between the rail 4 and the brake electromagnet 1 increases. In the multiple magnetic poles, each set of adjacent magnetic poles whose polarities are set to the same polarity is herein referred to as a magnetic-pole set.

Further, the electromagnetic brake device 100 operates when the coils 3 are energized using, for example, a DC-battery power source (not shown). In general, the rail 4 is formed of a magnetic material, such as iron, so that a magnetic flux is generated that passes through the rail 4 and the magnetic pole 2 of the brake electromagnet 1, and thus an electromagnetic force (attraction force) is generated between the rail 4 and the brake electromagnet 1.

Note that, here, the coils 3 are energized in the directions so that the polarities of the magnetic poles 2 in the brake electromagnet 1 are provided as "SSNNSSNN" from the observer's left in the figure; however, a similar operation is also achievable when the coils 3 are energized in the directions so that the polarities are provided as "NNSSNNSS" from the observer's left in the figure.

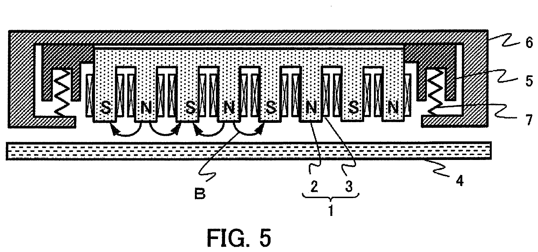

In contrast, as shown in FIG. 5, if, from the beginning, the coils 3 are energized so that the polarities of the magnetic poles 2 in the brake electromagnet 1 are alternately directed as "SNSNSNSN" from the observer's left in the figure, since the interval between the lower side of the magnetic poles 2 and the rail 4 is large, a magnetic flux that should have emerged from a given pole toward the rail 4 is shifted toward the adjacent poles (magnetic flux-B in FIG. 5), so that it is unable to make the magnetic flux toward the rail 4 large and is thus unable to effectively generate the attraction force.

Subsequently, when the magnetic flux-A flowing toward the rail 4 increases and the electromagnetic force (attraction force) between the brake electromagnet 1 and the rail 4 becomes larger than the deference between the force of the springs 7 and the gravity force by the brake electromagnet and the like, the brake electromagnet 1 moves against the spring force toward the rail 4. With such energization directions, the time from start of energization for the coils 3 to start of movement of the brake electromagnet 1 toward the rail 4 becomes shorter.

Then, as the interval between the magnetic poles 2 of the brake electromagnet 1 and the rail 4 decreases, a much larger magnetic force is generated, so that the brake electromagnet 1 becomes much closer to the rail 4. When the brake electromagnet 1 moves toward the rail 4, and a folded part 6a, which is placed in a C-shape end portion extending downward in the outer frame 6, makes contact with the jig 5, the brake electromagnet 1 is stopped from moving as shown in FIG. 4B. In this manner, due to the stoppage of the jig 5 by the folded part 6a in the outer frame 6, the brake electromagnet 1 is prevented from making contact with the rail 4.

In addition, because the brake electromagnet 1 does not make contact with the rail 4, it is possible to prevent the rail 4 from being damaged at the time of emergency brake operation, and is further possible to generate a less-variable braking force even when there is an effect by a step difference at the joint in the rail 4 or that by a step difference at the point switch. Note that, it is desired that the heightwise position of the outer frame 6 be adjusted when, for example, the wheel 11 has varied in diameter by grinding the rail at the time of inspection of the wheel, and in this case, the distance between the rail 4 and the magnetic poles 2 is desired to be about 1 mm to 5 mm.

Subsequent to when the brake electromagnet 1 comes close to the rail 4, eddy currents flow in the rail 4 correspondingly to respective transition regions between the S-poles and the N-poles, and this generates a braking force. In this state, three transition regions are provided between the S-poles and the N-poles, so that a first-stage weak braking force is generated.

Then, after the elapse of a preset time from start of energization for the coils 3, the polarities of the magnetic poles 3 are changed, namely, as shown in FIG. 4C, the coils 3 are energized so that the polarities of the magnetic poles 2 in the brake electromagnet 1 are alternately directed as "SNSNSNSN" from the observer's left in the figure. On this occasion, the distance between the rail 4 and the magnetic poles 2 is shorter than the distance between the magnetic poles, so that the magnetic flux emerging from the pole 2 reaches the rail 4 effectively. In this state, seven transition regions are provided between the S-poles and the N-poles, so that an increased second-stage braking force is provided as an eddy-current braking force.

It is noted that, in this Embodiment, such a case has been described where the interval between the magnetic poles and the rail during braking operation becomes narrower than that before braking operation; however, when the interval between the magnetic poles and the rail is fixed, it is also allowable to generate the first-stage weak braking force and thereafter to switch it to a second-stage strong braking force by magnetic-pole switching.

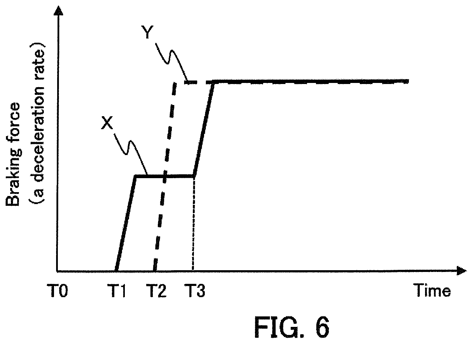

FIG. 6 is a graph showing a temporal variation in braking force of the electromagnetic brake device 100 according to Embodiment 1 of the invention. The magnitude of a braking force is equivalent to a deceleration rate of the vehicle. In a temporal variation Y in braking force according to conventional S-poles and N-poles placed opposite to each other, a strong braking force is applied after the elapse of time T2 from issue of a command for the brake operation, and on this occasion, the passengers feel a large deceleration shock.

In a temporal variation X in braking force according to Embodiment 1, a weak braking force is applied after the elapse of time T1 (T1 < T2) from issue of a command for the brake operation, and on this occasion, the passengers feel a small deceleration shock.

After the passengers are naturalized in such a small deceleration rate, a strong braking force is generated at time T3; however, an increase in braking force at this time is smaller than that in the case of conventional braking force, so that the shock that the passengers feel due to the brake operation is small as a whole. The time from T1 to T3 may be set arbitrarily, for example, to about 1 to 30 seconds.

Consequently, braking is accomplished with a short time from start of operation to generation of the first-stage braking force, and in which, after that generation, the second-stage braking force that is larger the first-stage braking force is generated, so that the shock to the passengers due to the brake operation is reduced.

It is noted that, in Embodiment 1, although the magnetic polar directions at the start of emergency operation are provided as "SSNNSSNN" from the observer's left in the figure, such energization may instead be applied by which the polarities of the eight magnetic poles are provided as "SSSSNNNN", for example. Even in this case, after the brake electromagnet 1 moves toward the rail, a weak eddy-current braking force is applied. Then, when the polarities of the magnetic poles are changed to "SNSNSNSN", a second-stage strong braking force is achieved, so that the shock to the passengers is reduced.

Further, in the case where such energization is applied by which the polarities of the magnetic poles at the start of emergency operation are provided as "SSSSNNNN" from the observer's left in the figure, when another energizing method for changing the polarities of the magnetic poles to "SSNNSSNN" is applied after the brake electromagnet 1 moves toward the rail, a braking force that is stronger than the first-stage force is achieved. Thereafter, when the polarities of the magnetic poles are further changed to "SNSNSNSN", a third-stage strong braking force is achieved, so that the shock to the passengers is more reduced.

As described above, the electromagnetic brake device 100 according to Embodiment 1 of the invention is provided with the brake electromagnet 1 in which the multiple magnetic poles 2 are arranged side by side in the rail longitudinal direction, and which is placed during traveling so that a predetermined interval is provided between the magnetic poles 2 and the rail 4, wherein, at the time of emergency brake operation in an emergency, the coils 3 are energized so that the polarities of each set of adjacent magnetic poles in the plural magnetic poles 2 are set to the same polarity but an electromagnetic force is generated between totally alternating sets of the polarities, to thereby cause the magnetic poles 2 and the rail 4 to come close to each other; and thereafter, the polarities of each set of adjacent magnetic poles 2 are changed to mutually different polarities to thereby increase the number of eddy currents.

With such a configuration, at the beginning of emergency brake operation, while the predetermined interval is provided between the rail and the magnetic poles, the average distance between the S-pole and the N-pole is set large, so that the attraction force toward the rail could be made large. Thus, it is possible not only to get movement toward the rail effectively but also to shorten the time before emergency braking action. Thereafter, in a state where the rail and the magnetic poles are close to each other, the polarities of the adjacent magnetic poles are changed to mutually different polarities.

This makes it possible to increase the number of eddy currents correspondingly to the regions between the different magnetic poles, without causing magnetic-flux leakage between the adjacent magnetic poles, to thereby increase the braking force. Accordingly, the time from issue of the operation command for emergency braking to generation of the braking force is short, and emergency braking is accomplished with a small shock to the passengers because the braking force can be escalated in a divided manner.

### Embodiment 2

In Embodiment 1, the description has been made on the case where all of the coils in the brake electromagnet 1 are energized, whereas in Embodiment 2, description will be made on a case where the number of coils to be energized is reduced in a first stage.

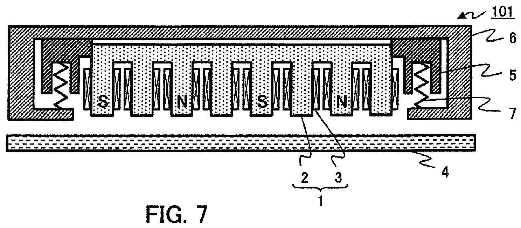

FIG. 7 is a cross-sectional view showing a configuration of an electromagnetic brake device 101 according to Embodiment 2 of the invention. As shown in FIG. 7, in the first stage, from the observer's left in the figure, the first magnetic pole is S-pole, the second one is not energized, the third one is N-pole, the fourth one is not energized, and the same energization as that for the first to fourth poles is applied to the fifth to eighth poles. The other configuration of the electromagnetic brake device 101 is the same as that of the electromagnetic brake device 100 of Embodiment 1, so that the same reference numerals are given to the equivalent parts and description thereof is omitted here.

The number of coils to be energized is four, that is half of the number in the case of Embodiment 1, so that, assuming that the same DC battery is used, it is possible to increase twice the current caused to flow in one coil. This increases the electromagnetic force (attraction force) between the brake electromagnet 1 and the rail 4, so that the time for the brake electromagnet 1 to come close to the rail 4 can be shortened.

When the brake electromagnet 1 comes close to the rail 4, since the number of magnetic poles generating magnetic fluxes is four, a weak braking force is provided due to eddy currents at three spots. In a second stage, after the elapse of a preset time from start of energization for the coils 3, the polarities of the coils 3 are changed so as to change the polarities of the magnetic poles to "SNSNSNSN" from the observer's left in the figure, so that a strong braking force is provided due to eddy currents at seven spots.

Accordingly, there is provided a brake electromagnet by which the time before generation of a first-stage braking force is short, and after that generation, a second-stage braking force that is larger than the first-stage braking force is generated, so that the shock to the passengers due to the brake operation is reduced.

As described above, the electromagnetic brake device 101 according to Embodiment 2 of the invention is provided with the brake electromagnet 1 in which the multiple magnetic poles 2 are arranged side by side in the rail longitudinal direction, and which is placed in normal times so that a predetermined interval is provided between the magnetic poles 2 and the rail 4, wherein, at the time of emergency brake operation in an emergency, half of the coils 3 of the magnetic poles 2 are energized so that an electromagnetic force is generated between alternating polarities of the magnetic poles 2 spaced apart with an interval therebetween, to thereby cause the magnetic poles 2 and the rail 4 to come close to each other; and thereafter, the polarities of every set of adjacent magnetic poles 2 are changed to mutually different polarities to thereby increase the number of eddy currents.

With such a configuration, in addition to achieving an effect described in Embodiment 1, it is possible to further shorten the time before emergency braking action by increasing the current caused to flow in the coil in the first stage, because the attraction force between the brake electromagnet and the rail increases.

### Embodiment 3

In Embodiment 1, the description has been made on the case where the polarities of the coils are changed after the elapse of a preset time from start of energization for the coils, whereas in Embodiment 3, description will be made on a case where a switch is provided as a detection unit, so that the polarities of the coils are changed according to the signal of the switch.

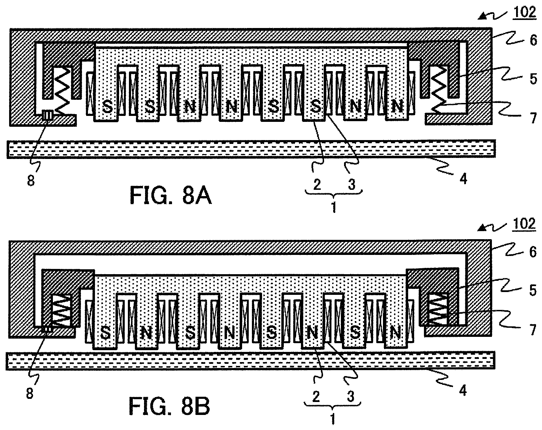

FIG. 8A and FIG. 8B are cross-sectional views showing a configuration of an electromagnetic brake device 102 according to Embodiment 3 of the invention. FIG. 8A shows its state before changing the polarities of the coils, and FIG. 8B shows its state after changing them.

As shown in FIG. 8A and FIG. 8B, on the outer frame 6 of the electromagnetic brake device 102, a switch 8 for changing the polarities of the coils is provided at a location at which the folded part 6a, which is placed in a C-shape end portion extending downward in the outer frame 6, makes contact with the jig 5 when the brake electromagnet 1 moves toward the rail 4. The time at which the polarities of the coils 3 are changed may be determined according to the signal of the switch 8. The other configuration of the electromagnetic brake device 102 is the same as that of the electromagnetic brake device 100 of Embodiment 1, so that the same reference numerals are given to the equivalent parts and description thereof is omitted here.

FIG. 8A shows a state of the electromagnetic brake device 102 before movement of the brake electromagnet 1, in which the magnetic polar directions are provided as "SSNNSSNN" from the observer's left in the figure. When the brake electromagnet 1 moves toward the rail 4, the folded part 6a, which is placed in a C-shape end portion extending downward in the outer frame 6, makes contact with the jig 5.

This stops the brake electromagnet 1 from moving and, at the same time, causes the jig 5 to press the switch 8 as shown in FIG. 8B, so that it is possible to accurately determine that the brake electromagnet 1 comes close to the rail 4. Reckoning from the time of this occurrence, after the elapse of a predetermined time, the polarities of the magnetic poles 2 in the brake electromagnet 1 are changed to "SNSNSNSN" from the observer's left in the figure.

In this manner, it is possible to accurately set the time after generation of the first-stage braking force until generation of the second-stage braking force. Note that the position at which the switch 8 is placed is not limited to that on a lower surface of the outer frame 6 that the jig 5 touches, and may be any position at which the switch operates according to the movement of the brake electromagnet 1.

As described above, in the electromagnetic brake device 102 according to Embodiment 3 of the invention, instead of the polarities of the coils being changed after the elapse of a preset time from start of energization for the coils as in Embodiment 1, the switch for changing the polarities of the coils at the same time as the brake electromagnet 1 is stopped from moving is provided. Thus, it is possible to accurately determine that the brake electromagnet comes close to the rail, and thus to accurately set the time after generation of the first- stage braking force until generation of the second-stage braking force.

### Embodiment 4

In Embodiment 1, the distance between the rail 4 and the brake electromagnet 1 can be adjusted using the spacer 13, whereas in Embodiment 4, description will be made on a case where a screw and a nut are instead used as an adjusting part.

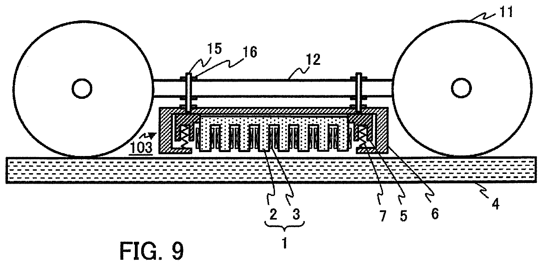

FIG. 9 is a cross-sectional view showing a configuration of an electromagnetic brake device 103 according to Embodiment 4 of the invention. As shown in FIG. 9, according to the electromagnetic brake device 103, screw 15 fixed to the outer frame 6 are attached by nuts 16 to the bogie frame 12. The other configuration of the electromagnetic brake device 103 is the same as that of the electromagnetic brake device 100 of Embodiment 1, so that the same reference numerals are given to the equivalent parts and description thereof is omitted here.

In the electromagnetic brake device 103, a length in the screw 15 up to the bogie frame 12 is varied by the rotation of the nut 16, so that the size of the interval between the rail 4 and the brake electromagnet 1 is adjusted. In this case, it is unnecessary to make ready a spacer 13 whose thickness is varied, and this has an advantage that it becomes easier to finely adjust the size of the interval between the rail 4 and the brake electromagnet 1.

As described above, in the electromagnetic brake device 103 according to Embodiment 4 of the invention, instead of the distance between the rail 4 and the brake electromagnet 1 being adjustable by the spacer 13 as in Embodiment 1, the screws 15 fixed to the outer frame 6 are attached by the nuts 16 to the bogie frame 12 and the length in the screw 15 up to the bogie frame 12 is varied according to the position of the nut 16. Thus, it is unnecessary to make ready a spacer 13 whose thickness is vaired, so that it becomes easier to finely adjust the size of the interval between the rail and the brake electromagnet.

### Embodiment 5

In Embodiment 1, the distance between the rail 4 and the brake electromagnet 1 can be adjusted using the spacer 13, whereas in Embodiment 5, description will be made on a case where a stopper is instead used as an adjusting part.

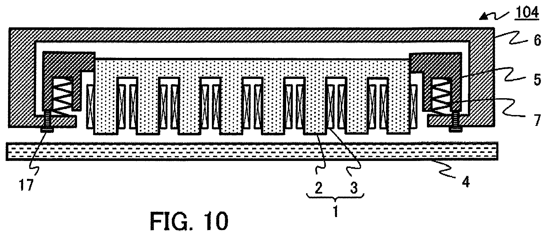

FIG. 10 is a cross-sectional view showing a configuration of an electromagnetic brake device 104 according to Embodiment 5 of the invention. As shown in FIG. 10, in the electromagnetic brake device 104, stoppers 17 are each provided on a surface of the C-shape end portion extending downward in the outer frame 6, at which the folded part 6a makes contact with the jig 5. The other configuration of the electromagnetic brake device 104 is the same as that of the electromagnetic brake device 100 of Embodiment 1, so that the same reference numerals are given to the equivalent parts and description thereof is omitted here.

In the electromagnetic brake device 104, the stoppers 17 are each provided as a screw and is fixed in such a manner that it is inserted in a screw hole formed in the outer frame 6, so that the amount of movement of the brake electromagnet 1 is adjusted according to the length of the stopper 17 and a screw insertion amount thereof. In this case, there is also an advantage that it becomes easier to finely adjust the size of the interval between the rail 4 and the brake electromagnet 1.

As described above, in the electromagnetic brake device 104 according to Embodiment 5 of the invention, instead of the distance between the rail 4 and the brake electromagnet 1 being adjustable by the spacer 13 as in Embodiment 1, the stoppers 17 are each provided on the surface at which the outer frame 6 makes contact with the jig 5 when the brake electromagnet 1 moves toward the rail 4. Thus, it becomes easier to finely adjust the size of the interval between the rail and the brake electromagnet, by adjusting the position of the stopper.

### Embodiment 6

In Embodiment 1, with respect to the gap between the jig 5 and the outer frame 6, the brake electromagnet 1 may move while the jig 5 and the outer frame 6 are touching each other, whereas in Embodiment 5, description will be made on a case where a lubricant member is provided between their touchable side surfaces.

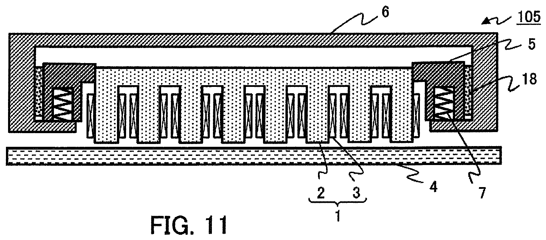

FIG. 11 is a cross-sectional view showing a configuration of an electromagnetic brake device 105 according to Embodiment 6 of the invention. As shown in FIG. 11, in the electromagnetic brake device 105, lubricant members 18 are each provided on a side surface of the jig 5 that is touchable to the outer frame 6. It may be provided on the inner surface-side of the outer frame 6. The other configuration of the electromagnetic brake device 105 is the same as that of the electromagnetic brake device 100 of Embodiment 1, so that the same reference numerals are given to the equivalent parts and description thereof is omitted here.

According to the electromagnetic brake device 105, because of the provision of the lubricant member 18 on the side surface of the jig 5 that is touchable to the outer frame 6, the movement of the brake electromagnet 1 becomes smooth, so that the time before generation of the braking force can be shortened. Further, it is desired that the lubricant member 18 be formed of a non-magnetic material.

This increases the magnetic resistance in a magnetic path in which the magnetic flux, that emerges from the magnetic pole 2 placed at the end of the brake electromagnet 1, returns to the brake electromagnet 1 through the outer frame 6 and the jig 5, so that the magnetic flux of the magnetic pole 2 is more likely to flow toward the rail, thus making it possible to shorten the time for the brake electromagnet 1 to move toward the rail 4 and to increase the braking force due to eddy current.

As described above, the electromagnetic brake device 105 according to Embodiment 6 of the invention is resulting from providing the lubricant members 18 in the gaps between the jigs 5 and the outer frame 6 in the configuration of Embodiment 1, so that the movement of the brake electromagnet 1 becomes smooth, to thereby shorten the time before generation of the braking force. Further, since the lubricant member 18 may be formed of a non- magnetic material, the magnetic flux of the magnetic pole 2 can be more likely to flow toward the rail, so that it is possible to shorten the time for the brake electromagnet 1 to move toward the rail 4 and to increase the braking force due to eddy current.

### Embodiment 7

In Embodiment 1, the brake electromagnet 1 is configured so that, after its movement, an interval remains between the rail 4 and the magnetic poles 2 in the brake electromagnet 1, whereas in Embodiment 7, description will be made on a case where a brake pad is provided.

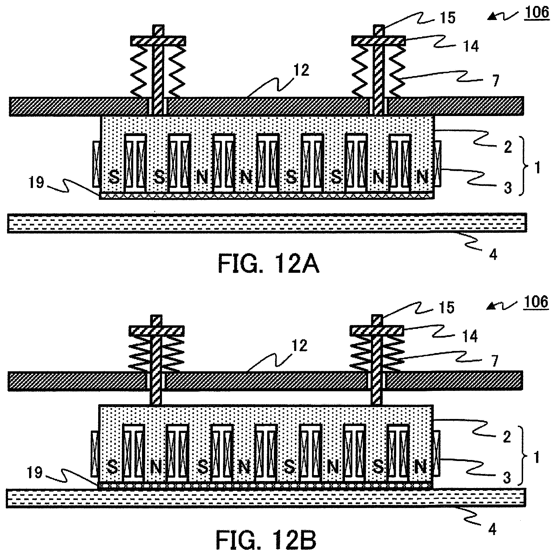

FIG. 12A and FIG. 12B are cross-sectional views showing a configuration of an electromagnetic brake device 106 according to Embodiment 7 of the invention. FIG. 12A shows its state before movement of the brake electromagnet 1 toward the rail 4, and FIG. 12B shows its state after the movement.

As shown in FIG. 12A and FIG. 12B, in the electromagnetic brake device 106, a brake pad 19 is provided on the magnetic poles 2 of the brake electromagnet 1 at their side facing to the rail 4. The brake pad 19 is fixed by means of adhesive or screw to the side of the magnetic poles 2 facing to the rail 4. Further, such a material is selected for the brake pad 19 that is high in friction coefficient with respect to the rail 4 and withstands temperature rise due to frictional heat generated during braking action.

In Embodiment 7, the electromagnetic brake device 106 is provided with springs 7 between the bogie frame 12 and a fixed plate 14 fixed to screws 15. Since the screws 15 are coupled to the brake electromagnet 1, in normal times, the springs 7 impel the brake electromagnet 1 vertically upward, so that the electromagnetic brake device 106 is being in contact with the bogie frame 12.

At the time of starting operation as an emergency brake in an emergency, the coils 3 are energized so that the polarities of the magnetic poles 2 in the brake electromagnet 1 are directed as "SSNNSSNN" from the observer's left in the figure, so that an electromagnetic force (attraction force) acts between the rail 4 and the brake electromagnet 1. Thus, the brake electromagnet 1 moves against impelling by the springs 7 toward the rail 4, so that the rail 4 and the brake pad 19 make contact with each other. On this occasion, a braking force due to frictional force between the rail 4 and the brake pad 19 is added to a first-stage braking force due to eddy current.

Thereafter, when the polarities of the magnetic poles 2 in the electromagnetic brake are changed to "SNSNSNSN" from the observer's left in the figure, this increases a second-stage braking force due to eddy-current. In this manner, when the brake pad 19 is provided on the magnetic poles 2 in the brake electromagnet 1, the braking force will be enhanced totally.

As described above, in the electromagnetic brake device 106 according to Embodiment 7 of the invention, since the brake pad 19 is provided on the magnetic poles 2 of the brake electromagnet 1 at their side facing to the rail 4, a braking force due to the frictional force will be added to a braking force due to eddy current, so that the braking force will be enhanced totally.

### Embodiment 8

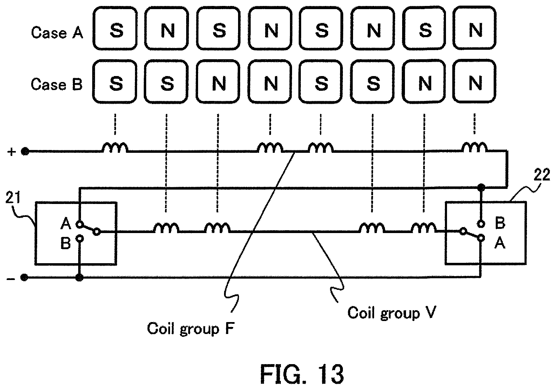

FIG. 13 is a schematic diagram of a circuit for energizing an electromagnetic brake device, according to Embodiment 8 of the invention. In the present invention, the coils 3 are energized in the directions so that the magnetic poles 2 in the brake electromagnet 1 are provided as "SSNNSSNN" from the observer's left in the figure as represented by Case B, and thereafter, the coils 3 are energized in the directions so that these poles are provided as "SNSNSNSN" from the observer's left in the figure as represented by Case A.

On this occasion, from the left of the figure, the first and fifth magnetic poles are unchanged as S-poles, and the fourth and eighth magnetic poles are unchanged as N-poles. The coils for them, that cause non-inversion of polar direction, are referred to as a coil group F. On the other hand, from the left of the figure, the second and sixth magnetic poles are inverted from S-poles to N-poles, and the third and seventh magnetic poles are inverted from N-poles to S-poles. The coils for them, that can cause inversion of magnetic polar direction, are referred to as a coil group V.

The coil group F is connected to the plus side of a power source, and the coil group V is serially connected to that group through two circuit switches 21, 22. The circuit switches 21, 22 may each be an electromagnetic switch having two contacts A, B (commonly known as a contactor), for example.

Regardless of which contacts are closed in the circuit switches 21, 22, in the coil group F that causes no polarity inversion, a current will flow from the left to the right of the figure. When the A-side contacts in the circuit switches 21, 22 are closed, the current will flow in the coil group V from the left to the right of the figure. When the B-side contacts in the circuit switches 21, 22 are closed, the current will flow in the coil group V from the right to the left of the figure.

Accordingly, it is possible to invert the polarities of the magnetic poles of the coil group V that can cause polarity inversion, while keeping unchanged the direction of the current in the coil group F that causes no polarity inversion.

In this case, there is a merit that the circuit can be configured with two circuit switchers 21, 22. It is noted that, in this Embodiment, such a case has been described where the number of the magnetic poles is eight; however, if the number of the magnetic poles is changed, the configuration can be achieved using two circuit switchers 21, 22. When a mechanical switch such as a contactor is used as the circuit switcher, there is a merit that a conduction loss at the switching portion is small. Further, each of the coil groups is configured with serial four coils; however, it may be two parallelly connected sets of two serial coils, or parallelly connected four coils.

### Embodiment 9

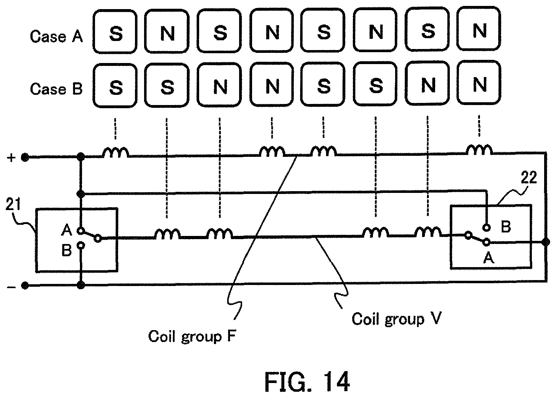

FIG. 14 is a schematic diagram of a circuit for energizing an electromagnetic brake device, according to Embodiment 9 of the invention. In Embodiment 8, the coil group F and the coil group VB are serially connected to each other, whereas in Embodiment 9, the coil group F and the coil group V are parallelly connected to each other while the others are the same as in Embodiment 8. In this case, there is a merit that the voltage of the circuit can be down to half in comparison with the case of serial connection.

### Embodiment 10

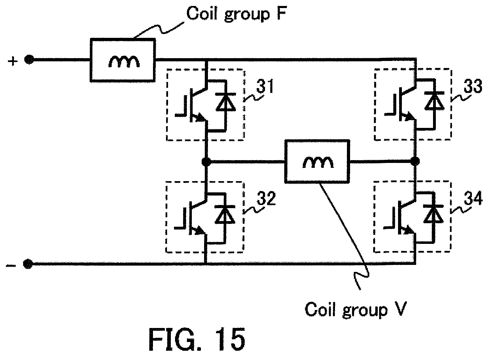

FIG. 15 is a schematic diagram of a circuit for energizing an electromagnetic brake device, according to Embodiment 10 of the invention. The coil group that can cause inversion of magnetic polar direction is connected inside a full bridge circuit of semiconductor switching elements 31, 32, 33, 34, and the coil group that causes no change of magnetic polar direction is serially connected to the full bridge circuit.

With respect to the operations of the switching elements 31, 32, 33, 34, when a switch 31 and a switch 34 are turned ON and a switch 32 and a switch 33 are turned OFF, a current flows in the coil group V from the left to the right of the figure, and when the switch 32 and the switch 33 are turned ON and the switch 31 and the switch 34 are turned OFF, a current flows in the coil group V from the right to the left of the figure. Thus, the magnetic polar directions of the coil group that can cause inversion of magnetic polar direction can be switched. In this case, since the circuit is configured with the switches without mechanical contact, it is provided as a long-life circuit.

### Embodiment 11

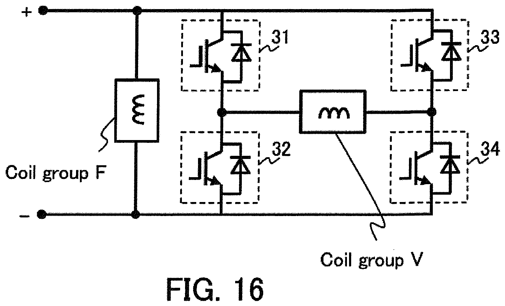

FIG. 16 is a schematic diagram of a circuit for energizing an electromagnetic brake device, according to Embodiment 11 of the invention. In Embodiment 11, the coil group that can cause inversion of magnetic polar direction is connected inside a full bridge circuit, and the coil group that causes no change of magnetic polar direction is parallelly connected to the full bridge circuit.

The others are the same as in Embodiment 10. In this case, it is possible to change the direction and the value of a current flowing in the coil group V while keeping unchanged the current in the coil group F, at the timing where the switching elements 33, 34, 35, 36 operate, so that the braking electromagnetic force can be adjusted.

### Embodiment 12

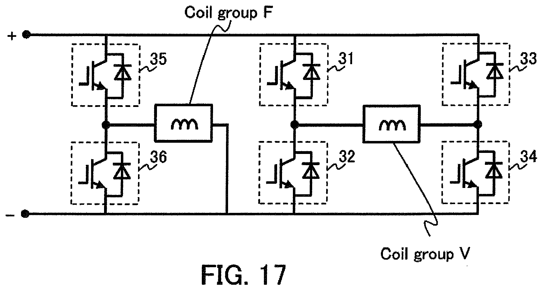

FIG. 17 is a schematic diagram of a circuit for energizing an electromagnetic brake device, according to Embodiment 12 of the invention. In Embodiment 12, such a case is shown where a single module in which six switching elements are incorporated is used.

The coil group that can cause inversion of magnetic polar direction is connected inside a full bridge circuit configured with four switching elements 31, 32, 33, and 34 and the coil group that causes no change of magnetic polar direction is parallelly connected to a half bridge circuit configured with two switching elements 35 and 36. Since the voltages of the coil group F and the coil group V can be separately controlled, there is an advantage that it is possible to change the current value of the coil group F and the polarities and the current value of the coil group V.

It should be noted that unlimited combination of the respective embodiments and an appropriate modification/omission in the embodiments may be made in the present invention without departing from the scope of the invention.

### DESCRIPTION OF REFERENCE NUMERALS and SIGNS

- 1: brake electromagnet
- 2: magnetic pole
- 3: coil
- 4: rail
- 8: switch
- 13: spacer,
- 14: fixed plate
- 15: screw
- 16: nut
- 17: stopper
- 21: circuit switcher
- 22: circuit switcher
- 31: switching element
- 32: switching element
- 33: switching element
- 34: switching element
- 35: switching element
- 36: switching element
- 100: electromagnetic brake device
- 101: electromagnetic brake device
- 102: electromagnetic brake device
- 103: electromagnetic brake device
- 104: electromagnetic brake device
- 105: electromagnetic brake device
- 106: electromagnetic brake device.

## Claims

1. A braking device for a moving body (100, 101, 102, 103, 104, 105, 106) comprising a braking unit in which multiple magnetic poles (2) each wound with a coil (3) are arranged side by side in a moving direction of a movable object that is movable along a rail (4), and which is placed so that an interval is provided between the magnetic poles (2) and the rail (4) during travelling of the movable object, wherein the braking unit comprises multiple magnetic-pole sets which each consist of a plurality of adjacent magnetic poles (2) of the multiple magnetic poles (2),
**characterised in that**, when the braking unit receives a brake operation command, the braking unit is configured to energize the coils such that the polarities of the adjacent magnetic poles (2) in each magnetic-pole set are set to the same polarity as each other, but such that adjacent magnetic-pole sets are set to have mutually different polarities; and thereafter, the polarities of the adjacent magnetic poles (2) are set to mutually different polarities.

2. A braking device for a moving body (101) comprising a braking unit in which multiple magnetic poles (2) each wound with a coil (3) are arranged side by side in a moving direction of a movable object that is movable along a rail (4), and which is placed so that an interval is provided between the magnetic poles (2) and the rail (4) during travelling of the movable object,
**characterised in that**, when the braking unit receives a brake operation command, the braking unit is configured to energize the coils (3) of half of the magnetic poles (2) corresponding to every other magnetic pole (2) in the multiple magnetic poles (2) arranged side by side, and thereafter, energize the coils (3) of all of the magnetic poles (2) such that adjacent magnetic poles (2) of the multiple magnetic poles (2) have mutually different polarities.

3. The braking device for a moving body (100) according to claim 1 or 2, wherein, after the elapse of a preset time from starting to brake the movable object, the braking unit changes the polarities of each set of adjacent magnetic poles (2) to mutually different polarities.

4. The braking device for a moving body (102) according to claim 1 or 2,
wherein the magnetic poles (2) in the braking unit are provided with a device for changing the interval between the magnetic poles (2) and the rail (4) during braking operation from that before braking operation, and a detection unit for detecting their coming close to the rail (4), so that each set of adjacent magnetic poles (2) are changed to have mutually different polarities, on the basis of a signal from the detection unit.

5. The braking device for a moving body (103, 104)
according to any one of claims 1 to 4,
wherein the magnetic poles (2) during braking operation of the braking unit are provided with an adjusting part for adjusting the interval to the rail (4).

6. The braking device for a moving body
according to any one of claims 1 to 5,
wherein the magnetic poles (2) in the braking unit are provided with a brake pad (19) on their side that will come close to the rail (4), and the brake pad (19) is made contact with the rail (4) when that side comes close thereto.

7. The braking device for a moving body (106)
according to any one of claims 1 to 5,
wherein a coil group (F) that causes no change of magnetic polar direction and a coil group (V) that can cause inversion of magnetic polar direction are serially connected to each other, and circuit switchers (21, 22) are connected to both ends of the coil group (V) that can cause inversion of magnetic polar direction, so that magnetic polar directions of the coil group (V) that can cause inversion of magnetic polar direction are changed by contact-switching of the circuit switchers (21, 22).

8. The braking device for a moving body according to any one of claims 1 to 5,
wherein a coil group (F) that causes no change of magnetic polar direction and a coil group (V) that can cause inversion of magnetic polar direction are parallelly connected to each other, and circuit switchers (21, 22) are connected to both ends of the coil group (V) that can cause inversion of magnetic polar direction, so that magnetic polar directions of the coil group (V) that can cause inversion of magnetic polar direction are changed by contact-switching of the circuit switchers (21, 22).

9. The braking device for a moving body according to any one of claims 1 to 5, wherein a coil group (V) that can cause inversion of magnetic polar direction is connected inside a full bridge circuit of semiconductor switching elements (31, 32, 33, 34), and a coil group (F) that causes no change of magnetic polar direction is serially connected to the full bridge circuit, so that magnetic polar directions of the coil group (V) that can cause inversion of magnetic polar direction are switched by operations of the switching elements (31, 32, 33, 34).

10. The braking device for a moving body according to any one of claims 1 to 5, wherein a coil group (V) that can cause inversion of magnetic polar direction is connected inside a full bridge circuit of semiconductor switching elements (31, 32, 33, 34), and a coil group (F) that causes no change of magnetic polar direction is parallelly connected to the full bridge circuit, so that magnetic polar directions of the coil group (V) that can cause inversion of magnetic polar direction are switched by operations of the switching elements (31, 32, 33, 34).

11. The braking device for a moving body according to any one of Claims 1 to 5, comprising a single module in which six semiconductor switching elements (31, 32, 33, 34, 35, 36) are incorporated, so that a coil group (F) that causes no change of magnetic polar direction and a coil group (V) that can cause inversion of magnetic polar direction are connected to a half bridge and a full bridge in that module, respectively.

## Patentansprüche

1. Bremsvorrichtung für einen sich bewegenden Körper (100, 101, 102, 103, 104, 105, 106), die eine Bremseinheit aufweist, in der mehrere Magnetpole (2), die jeweils mit einer Spule (3) bewickelt sind, nebeneinander in einer Bewegungsrichtung eines bewegbaren Objekts angeordnet sind, das entlang einer Schiene (4) bewegbar ist, und die derart angeordnet ist, dass ein Abstand zwischen den Magnetpolen (2) und der Schiene (4) während der Bewegung des bewegbaren Objekts vorgesehen ist, wobei die Bremseinheit mehrere Magnetpolsätze aufweist, die jeweils aus mehreren benachbarten Magnetpolen (2) der mehreren Magnetpole (2) bestehen,
**dadurch gekennzeichnet,**
**dass** dann, wenn die Bremseinheit einen Bremsbetätigungsbefehl empfängt, die Bremseinheit dazu ausgebildet ist, die Spulen derart zu erregen, dass die Polaritäten der benachbarten Magnetpole (2) in jedem Magnetpolsatz zueinander auf die gleiche Polarität eingestellt werden, aber derart, dass benachbarte Magnetpolsätze derart eingestellt werden, dass sie gegenseitig unterschiedliche Polaritäten aufweisen;
und **dass** danach die Polaritäten der benachbarten Magnetpole (2) auf gegenseitig unterschiedliche Polaritäten eingestellt werden.

2. Bremsvorrichtung für einen sich bewegenden Körper (101), die eine Bremseinheit aufweist, in der mehrere Magnetpole (2), die jeweils mit einer Spule (3) bewickelt sind, nebeneinander in einer Bewegungsrichtung eines bewegbaren Objekts angeordnet sind, das entlang einer Schiene (4) bewegbar ist, und die derart angeordnet ist, dass ein Abstand zwischen den Magnetpolen (2) und der Schiene (4) während der Bewegung des bewegbaren Objekts vorgesehen ist,
**dadurch gekennzeichnet,**
**dass** dann, wenn die Bremseinheit einen Bremsbetätigungsbefehl empfängt, die Bremseinheit dazu ausgebildet ist, die Spulen (3) einer Hälfte der Magnetpole (2), die jedem anderen Magnetpol (2) in den mehreren nebeneinander angeordneten Magnetpolen (2) entsprechen, zu erregen und danach die Spulen (3) aller Magnetpole (2) derart zu erregen, dass benachbarte Magnetpole (2) der mehreren Magnetpole (2) gegenseitig unterschiedliche Polaritäten aufweisen.

3. Bremsvorrichtung für einen sich bewegenden Körper (100)
nach Anspruch 1 oder 2,
wobei, nach dem Verstreichen einer vorgegebenen Zeit vom Beginn des Bremsens des bewegbaren Objekts an, die Bremseinheit die Polaritäten jedes Satzes benachbarter Magnetpole (2) auf gegenseitig unterschiedliche Polaritäten ändert.

4. Bremsvorrichtung für einen sich bewegenden Körper (102)
nach Anspruch 1 oder 2,
wobei die Magnetpole (2) in der Bremseinheit folgendes aufweisen: eine Einrichtung zum Ändern des Abstands zwischen den Magnetpolen (2) und der Schiene (4) während des Bremsvorgangs gegenüber dem vor dem Bremsvorgang und eine Erfassungseinheit zum Detektieren ihrer Annäherung an die Schiene (4), so dass jeder Satz benachbarter Magnetpole (2) geändert wird, um gegenseitig unterschiedliche Polaritäten aufzuweisen, und zwar auf der Grundlage eines Signals von der Erfassungseinheit.

5. Bremsvorrichtung für einen sich bewegenden Körper (103, 104)
nach einem der Ansprüche 1 bis 4,
wobei die Magnetpole (2) während des Bremsvorgangs der Bremseinheit ein Einstellteil zum Einstellen des Abstands zur Schiene (4) aufweisen.

6. Bremsvorrichtung für einen sich bewegenden Körper
nach einem der Ansprüche 1 bis 5,
wobei die Magnetpole (2) in der Bremseinheit mit einem Bremsbelag (19) auf ihrer jeweiligen Seite versehen sind, die der Schiene (4) nahekommt, und wobei der Bremsbelag (19) mit der Schiene (4) in Kontakt gebracht wird, wenn diese Seite der Schiene (4) nahekommt.

7. Bremsvorrichtung für einen sich bewegenden Körper (106)
nach einem der Ansprüche 1 bis 5,
wobei eine Spulengruppe (F), die keine Änderung der magnetischen Polarrichtung bewirkt, und eine Spulengruppe (V), die eine Umkehrung der magnetischen Polarrichtung bewirken kann, in Reihe miteinander verbunden sind, und Schaltungsschalter (21, 22) mit beiden Enden der Spulengruppe (V) verbunden sind, die eine Umkehrung der magnetischen Polarrichtung bewirken können, so dass die magnetischen Polarrichtungen der Spulengruppe (V), die eine Umkehrung der magnetischen Polarrichtung bewirken können, durch ein Kontaktschalten der Schaltungsschalter (21, 22) geändert werden.

8. Bremsvorrichtung für einen sich bewegenden Körper
nach einem der Ansprüche 1 bis 5,
wobei eine Spulengruppe (F), die keine Änderung der magnetischen Polarrichtung bewirkt, und eine Spulengruppe (V), die eine Umkehrung der magnetischen Polarrichtung bewirken kann, parallel miteinander verbunden sind, und Schaltungsschalter (21, 22) mit beiden Enden der Spulengruppe (V) verbunden sind, die eine Umkehrung der magnetischen Polarrichtung bewirken können, so dass die magnetischen Polarrichtungen der Spulengruppe (V), die eine Umkehrung der magnetischen Polarrichtung bewirken können, durch ein Kontaktschalten der Schaltungsschalter (21, 22) geändert werden.

9. Bremsvorrichtung für einen sich bewegenden Körper
nach einem der Ansprüche 1 bis 5,
wobei eine Spulengruppe (V), die eine Umkehrung der magnetischen Polarrichtung bewirken kann, innerhalb einer Vollbrückenschaltung aus Halbleiterschaltelementen (31, 32, 33, 34) verbunden ist, und eine Spulengruppe (F), die keine Änderung der magnetischen Polarrichtung bewirkt, mit der Vollbrückenschaltung in Reihe geschaltet ist, so dass die magnetischen Polarrichtungen der Spulengruppe (V), die eine Umkehrung der magnetischen Polarrichtung bewirken können, durch Betätigungen der Schaltelemente (31, 32, 33, 34) umgeschaltet werden.

10. Bremsvorrichtung für einen sich bewegenden Körper
nach einem der Ansprüche 1 bis 5,
wobei eine Spulengruppe (V), die eine Umkehrung der magnetischen Polarrichtung bewirken kann, innerhalb einer Vollbrückenschaltung aus Halbleiterschaltelementen (31, 32, 33, 34) verbunden ist, und eine Spulengruppe (F), die keine Änderung der magnetischen Polarrichtung bewirkt, parallel zu der Vollbrückenschaltung verbunden ist, so dass die magnetischen Polarrichtungen der Spulengruppe (V), die eine Umkehrung der magnetischen Polarrichtung bewirken können, durch Betätigungen der Schaltelemente (31, 32, 33, 34) umgeschaltet werden.

11. Bremsvorrichtung für einen sich bewegenden Körper
nach einem der Ansprüche 1 bis 5,
die ein einziges Modul aufweist, in dem sechs Halbleiterschaltelemente (31, 32, 33, 34, 35, 36) enthalten sind, so dass eine Spulengruppe (F), die keine Änderung der magnetischen Polarrichtung bewirkt, und eine Spulengruppe (V), die eine Umkehrung der magnetischen Polarrichtung bewirken kann, jeweils mit einer Halbbrücke und einer Vollbrücke in diesem Modul verbunden sind.

## Revendications

1. Dispositif de freinage pour un corps en déplacement (100, 101, 102, 103, 104, 105, 106) comprenant une unité de freinage dans laquelle de multiples pôles magnétiques (2), enroulés chacun avec une bobine (3), sont agencés côte à côte dans une direction de déplacement d'un objet déplaçable qui est déplaçable le long d'un rail (4), et qui est placée de sorte qu'un intervalle est prévu entre les pôles magnétiques (2) et le rail (4) pendant la circulation de l'objet déplaçable, dans lequel l'unité de freinage comprend de multiples jeux de pôles magnétiques qui consistent chacun en une pluralité de pôles magnétiques adjacents (2) parmi les multiples pôles magnétiques (2),
**caractérisé en ce que**,
quand l'unité de freinage reçoit un ordre d'actionnement de freinage, l'unité de freinage est configurée pour exciter les bobines de sorte que les polarités des pôles magnétiques adjacents (2) dans chaque jeu de pôles magnétiques sont fixées à la même polarité les unes que les autres, mais de sorte que les jeux de pôles magnétiques adjacents sont fixés de manière à avoir des polarités mutuellement différentes ; et ensuite, les polarités des pôles magnétiques adjacents (2) sont fixées à des polarités mutuellement différentes.

2. Dispositif de freinage pour un corps en déplacement (101) comprenant une unité de freinage dans laquelle de multiples pôles magnétiques (2), enroulés chacun avec une bobine (3), sont agencés côte à côte dans une direction de déplacement d'un objet déplaçable qui est déplaçable le long d'un rail (4), et qui est placée de sorte qu'un intervalle est prévu entre les pôles magnétiques (2) et le rail (4) pendant la circulation de l'objet déplaçable,
**caractérisé en ce que**,
quand l'unité de freinage reçoit un ordre d'actionnement de freinage, l'unité de freinage est configurée pour exciter les bobines (3) de la moitié des pôles magnétiques (2) correspondant à un pôle magnétique (2) sur deux dans les multiples pôles magnétiques (2) agencés côte à côte, et ensuite, exciter les bobines (3) de tous les pôles magnétiques (2) de sorte que des pôles magnétiques adjacents (2) des multiples pôles magnétiques (2) ont des polarités mutuellement différentes.

3. Dispositif de freinage pour un corps en déplacement (100) selon la revendication 1 ou 2, dans lequel, après l'écoulement d'un temps prédéfini depuis le démarrage du freinage de l'objet déplaçable, l'unité de freinage modifie les polarités de chaque jeu de pôles magnétiques adjacents (2) vers des polarités mutuellement différentes.

4. Dispositif de freinage pour un corps en déplacement (102) selon la revendication 1 ou 2, dans lequel les pôles magnétiques (2) dans l'unité de freinage sont dotés d'un dispositif destiné à modifier l'intervalle entre les pôles magnétiques (2) et le rail (4) pendant un actionnement de freinage par rapport à celui d'avant l'actionnement de freinage, et d'une unité de détection destinée à détecter leur rapprochement du rail (4), de sorte que chaque jeu de pôles magnétiques adjacents (2) est modifié de sorte qu'ils ont des polarités mutuellement différentes, sur la base d'un signal provenant de l'unité de détection.

5. Dispositif de freinage pour un corps en déplacement (103, 104) selon l'une quelconque des revendications 1 à 4,
dans lequel les pôles magnétiques (2), pendant l'actionnement de freinage de l'unité de freinage, sont dotés d'une partie d'ajustement destinée à ajuster l'intervalle jusqu'au rail (4).

6. Dispositif de freinage pour un corps en déplacement selon l'une quelconque des revendications 1 à 5,
dans lequel les pôles magnétiques (2) dans l'unité de freinage sont dotés d'un patin de freinage (19) sur leur côté qui se rapprochera du rail (4), et le patin de freinage (19) est amené en contact avec le rail (4) quand ce côté se rapproche de celui-ci.

7. Dispositif de freinage pour un corps en déplacement (106) selon l'une quelconque des revendications 1 à 5,
dans lequel un groupe de bobines (F) qui n'entraîne aucun changement de direction polaire magnétique et un groupe de bobines (V) qui peut entraîner une inversion de direction polaire magnétique sont connectés en série l'un à l'autre, et des commutateurs de circuit (21, 22) sont connectés aux deux extrémités du groupe de bobines (V) qui peut entraîner une inversion de direction polaire magnétique, de sorte que des directions polaires magnétiques du groupe de bobines (V) qui peut entraîner une inversion de direction polaire magnétique sont modifiées par commutation de contact des commutateurs de circuit (21, 22).

8. Dispositif de freinage pour un corps en déplacement selon l'une quelconque des revendications 1 à 5,
dans lequel un groupe de bobines (F) qui n'entraîne aucun changement de direction polaire magnétique et un groupe de bobines (V) qui peut entraîner une inversion de direction polaire magnétique sont connectés en parallèle l'un à l'autre, et des commutateurs de circuit (21, 22) sont connectés aux deux extrémités du groupe de bobines (V) qui peut entraîner une inversion de direction polaire magnétique, de sorte que des directions polaires magnétiques du groupe de bobines (V) qui peut entraîner une inversion de direction polaire magnétique sont modifiées par commutation de contact des commutateurs de circuit (21, 22).

9. Dispositif de freinage pour un corps en déplacement selon l'une quelconque des revendications 1 à 5,
dans lequel un groupe de bobines (V) qui peut entraîner une inversion de direction polaire magnétique est connecté à l'intérieur d'un circuit en pont intégral composé d'éléments de commutation semi-conducteurs (31, 32, 33, 34), et un groupe de bobines (F) qui n'entraîne aucun changement de direction polaire magnétique est connecté en série au circuit en pont intégral, de sorte que des directions polaires magnétiques du groupe de bobines (V) qui peut entraîner une inversion de direction polaire magnétique sont commutées par des actionnements des éléments de commutation (31, 32, 33, 34).

10. Dispositif de freinage pour un corps en déplacement selon l'une quelconque des revendications 1 à 5,
dans lequel un groupe de bobines (V) qui peut entraîner une inversion de direction polaire magnétique est connecté à l'intérieur d'un circuit en pont intégral composé d'éléments de commutation semi-conducteurs (31, 32, 33, 34), et un groupe de bobines (F) qui n'entraîne aucun changement de direction polaire magnétique est connecté en parallèle au circuit en pont intégral, de sorte que des directions polaires magnétiques du groupe de bobines (V) qui peut entraîner une inversion de direction polaire magnétique sont commutées par des actionnements des éléments de commutation (31, 32, 33, 34).

11. Dispositif de freinage pour un corps en déplacement selon l'une quelconque des revendications 1 à 5, comprenant un module unique dans lequel six éléments de commutation semi-conducteurs (31, 32, 33, 34, 35, 36) sont incorporés, de sorte qu'un groupe de bobines (F) qui n'entraîne aucun changement de direction polaire magnétique et un groupe de bobines (V) qui peut entraîner une inversion de direction polaire magnétique sont connectées à un demi-pont et à un pont intégral dans ce module, respectivement.
